# EUROPEAN PATENT APPLICATION

(11) **EP 4 675 343 A1**
(43) Date of publication of application: **07.01.2026**
(21) Application number: 24315332.7
(22) Date of filing: 05.07.2024
(51) Int. Cl.: G02C 13/00

(54) **SYSTEM FOR DETERMINING AN UPDATED VALUE OF AT LEAST ONE CHARACTERISTIC OF A HEAD-MOUNTABLE DEVICE**

(71) Applicant: ESSILOR INTERNATIONAL, 94220 Charenton-Le-Pont (FR)
(72) Inventor: Poisson, Lauriane, 94410 SAINT-MAURICE (FR); Pietri, Cécile, 94210 SAINT-MAUR-DES-FOSSES (FR); Bressange, Constance, 92340 BOURG-LA-REINE (FR); Guegan, Julien, 94160 SAINT-MANDE (FR)
(74) Representative: Korakis-Ménager, Sophie

(57) **Abstract**

System for determining an updated value of at least one characteristic of a head-mountable device. The system is configured to obtain a value of at least one adaptation parameter, the at least one adaptation parameter representing an adaptation of the head-mountable device to a user, to determine a value of an adaptation probability of the head-mountable device to the user when wearing the head-mountable device based on the value of the at least one adaptation parameter, and to determine, based on the value of the adaptation probability, the updated value of the at least one characteristic of the head-mountable device.

## Description

### Technical field

This disclosure relates to devices and systems for determining an updated value of at least one characteristic of a head-mountable device.

### Background information and prior art

To enhance the adaptation of a head-mountable device to a user, it would be useful to have a way to determine updated values of characteristics of the head-mountable device. A new head-mountable device having the updated values of the characteristics will have an enhanced adaptation to the user compared to the previous head-mountable device.

Therefore, there is a need for systems for determining an updated value of at least one characteristic of a head-mountable device.

### Summary

The following presents a simplified summary to provide a basic understanding of various aspects of this disclosure. This summary is not an extensive overview of all contemplated aspects and is intended to neither identify key or critical elements of all aspects nor delineate the scope of any or all aspects. The sole purpose is to present some concepts of one or more aspects in a simplified form as a prelude to the more detailed description that is presented later.

One aspect of this disclosure is a system for determining an updated value of at least one characteristic of a head-mountable device. The system is configured to obtain a value of at least one adaptation parameter, the at least one adaptation parameter representing an adaptation of the head-mountable device to a user, to determine a value of an adaptation probability of the head-mountable device to the user when wearing the head-mountable device based on the value of the at least one adaptation parameter, and to determine, based on the value of the adaptation probability, the updated value of the at least one characteristic of the head-mountable device.

For some type of head-mountable devices, for example for head-mountable device comprising progressive addition lenses, numerous studies indicate that there may have inadaptations (no long-term acceptance of the user with the head-mountable device) and eventually returns of the head-mountable device because of these inadaptations.

Using the system previously presented one may determine a value of an adaptation probability and update values of characteristics of the head-mountable device if the value of the adaptation probability is low. Therefore, one may anticipate inadaptations and avoid returns by providing a new head-mountable device having updated value of characteristics. This is particularly advantageous for head-mountable device comprising progressive addition lenses.

This system allows the reduction of returns of head-mountable device by the users and could be of interest for:
- User: the user may test his new head-mountable device in real life conditions before leaving and have the insurance that the new head-mountable device is well adapted.
- Optician: the optician may solve the user's problem, and so increase adaptation, during delivery and not have to deal with it during another appointment. To do this, the system may provide to the optician the action to realize to increase this adaptation.

Another aspect of this disclosure is a computer implemented method for determining an updated value of at least one characteristic of a head-mountable device. The computer-implemented method comprises obtaining a value of at least one adaptation parameter, the at least one adaptation parameter representing an adaptation of the head-mountable device to a user, determining a value of an adaptation probability of the user when wearing the head-mountable device based on the value of the at least one adaptation parameter, and determining, based on the value of the adaptation probability, the updated value of the at least one characteristic of the head-mountable device.

Another aspect of this disclosure is a computer program comprising instructions which, when the computer program is executed by a computer, cause the computer to carry out a method for determining an updated value of at least one characteristic of a head-mountable device. The method comprises obtaining a value of at least one adaptation parameter, the at least one adaptation parameter representing an adaptation of the head-mountable device to a user, determining a value of an adaptation probability of the user when wearing the head-mountable device based on the value of the at least one adaptation parameter, and determining, based on the value of the adaptation probability, the updated value of the at least one characteristic of the head-mountable device.

A computer may include a memory and a processor. Examples of processors include microprocessors, microcontrollers, graphics processing units (GPUs), central processing units (CPUs), application processors, digital signal processors (DSPs), reduced instruction set computing (RISC) Processors, systems on a chip (SoC), field-programmable gate arrays (FPGAs), programmable logic devices (PLDs), state machines, gated logic, discrete hardware circuits, and other suitable hardware configured to perform the various functionality described throughout this disclosure. The memory may be a computer-readable media. By way of example, and not limitation, such computer-readable media may include a random-access memory (RAM), a read-only memory (ROM), an electrically erasable programmable ROM (EEPROM), optical disk storage, magnetic disk storage, other magnetic storage devices, combinations of the aforementioned types of computer-readable media, or any other medium that may be used to store computer executable code in the form of instructions or data structures that may be accessed by the processor of the computer.

Another aspect of this disclosure is a non-transitory program storage device, readable by a computer, tangibly embodying a program of instructions executable by the computer to perform a method for determining an updated value of at least one characteristic of a head-mountable device. The method comprises obtaining a value of at least one adaptation parameter, the at least one adaptation parameter representing an adaptation of the head-mountable device to a user, determining a value of an adaptation probability of the user when wearing the head-mountable device based on the value of the at least one adaptation parameter, and determining, based on the value of the adaptation probability, the updated value of the at least one characteristic of the head-mountable device.

### Description of the drawings

For a more complete understanding of the description provided herein and the advantages thereof, reference is now made to the brief descriptions below, taken in connection with the accompanying drawings and detailed description, wherein like reference numerals represent like parts.
Figure 1 represents a system for determining an updated value of at least one characteristic of a head-mountable device.
Figure 2 represents an eyewear.
Figure 3 represents the method for determining an updated value of at least one characteristic of a head-mountable device.
Figure 4 represents a way of using the method of the figure 3.

### Detailed description of embodiments

The detailed description set forth below in connection with the appended drawings is intended as a description of various possible embodiments and is not intended to represent the only embodiments in which the concepts described herein may be practiced. The detailed description includes specific details for the purpose of providing a thorough understanding of various concepts. However, it will be apparent to those skilled in the art that these concepts may be practiced without these specific details. In some instances, well-known structures and components are shown in block diagram form to avoid obscuring such concepts.

### Description of the system for determining an updated value of at least one characteristic of a head-mountable device

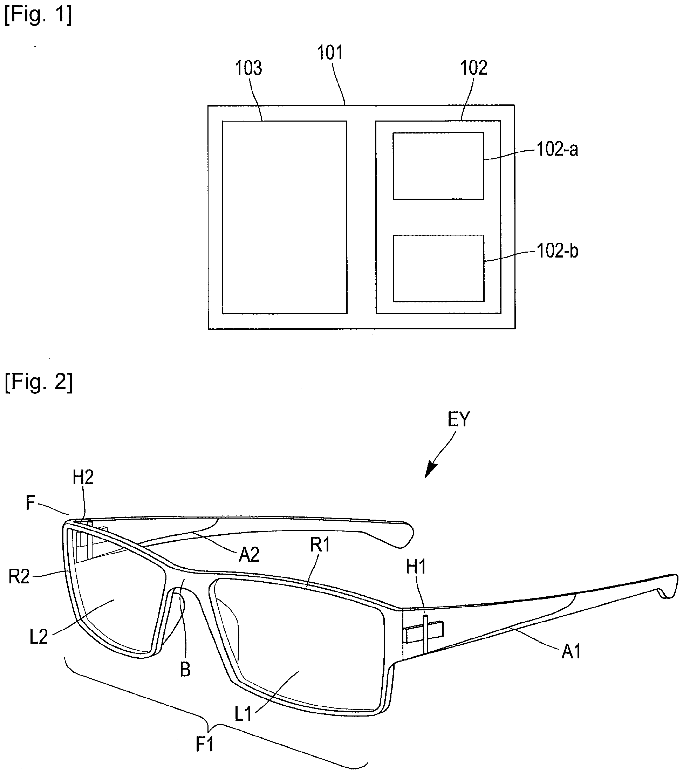

Figure 1 represents a system 101 configured for determining an updated value of at least one characteristic of a head-mountable device.

The head-mountable device may be intended to be worn by a user.

The head-mountable device may be an eyewear.

The updated value of the at least one characteristic of the head-mountable device may be obtained from a current value of the at least one characteristic of the head-mountable device.

This system 101 may be used in different environments (regular optical shops, at home after online purchase, in hospitals...).

The system 101 is particularly advantageous when the head-mountable device comprises progressive addition lenses, however the system may also be used to head-mountable devices comprising other types of lenses, like single vision lenses or myopia control lenses.

The system 101 may also be configured for determining a value of an adaptation probability of the head-mountable device to the user. The value of the adaptation probability may be determined when the user is wearing the head-mountable device. The system 101 may also be configured for determining the updated value of the at least one characteristic of the head-mountable device based on the value of the adaptation probability.

By adaptation of a head-mountable device one means the long-term acceptance of the head-mountable device by the user, i.e. will the user accept the head-mountable device after a predetermined period and not request another head-mountable device. The predetermined period may be some weeks or months after the delivery of the head-mountable device.

By adaptation parameter one means a parameter integrated in the calculation of the value of the adaptation probability of the head-mountable device to the user. To determine the value of the adaptation parameter one may use a test that will output this value.

By adaptation probability to the user, one means the probability of the long-term acceptance, of the head-mountable device, by the user.

Higher is the value of the adaptation probability, higher is the acceptability of the head-mountable device by the user.

**The** system 101 may be used by an eye care professional (ECP) for example during the delivery of the new head-mountable device in an optical shop and may be based on values of parameters obtained during a customer journey.

**The** customer journey comprises a plurality of tests. The results of these tests may be used to determine the value of the adaptation parameter and the value of the adaptation probability. The results of these tests may be used to determine the updated value of the at least one characteristic of the head-mountable device.

**The** system 101 may comprise a calculation device comprising a calculation module 102. The calculation module 102 may be configured for determining the value of the adaptation probability of a head-mountable device to the user when wearing the head-mountable device and for determining the updated value of the at least one characteristic of the head-mountable device.

In embodiments the system 101 may be constituted of only the calculation device comprising the calculation module 102.

The calculation device may comprise a screen and means for inputting data to the calculation device. The means for inputting data may be a keyboard, a mouse or a touch pad.

**The** system 101 may also comprise a manufacturing device 103 for manufacturing, based on the updated value of the at least one characteristic of the head-mountable device, a new head-mountable device.

**The** manufacturing device 103 may be a set comprising:
- A device to manufacture a lens based on a semi-finished lens blank, for example free form machine,
- A device to edge a lens previously manufactured, to adapt the lens to a frame selected by the user and adapted to values of physiological parameters of the user.

The calculation module 102 may comprise a memory 102-a and a processor 102-b.

The calculation module 102 may be a low resource calculation module.

Examples of processors 102-b include microprocessors, microcontrollers, graphics processing units (GPUs), central processing units (CPUs), application processors, digital signal processors (DSPs), reduced instruction set computing (RISC) processors, systems on a chip (SoC), baseband processors, field-programmable gate arrays (FPGAs), programmable logic devices (PLDs), state machines, gated logic, discrete hardware circuits, and other suitable hardware configured to perform the various functionality described throughout this disclosure.

The memory 102-a is computer-readable media. By way of example, and not limitation, such computer-readable media may include a random-access memory (RAM), a read-only memory (ROM), an electrically erasable programmable ROM (EEPROM), optical disk storage, magnetic disk storage, other magnetic storage devices, combinations of the aforementioned types of computer-readable media, or any other medium that may be used to store computer executable code in the form of instructions or data structures that may be accessed by the processor 102-a of the calculation module 102.

The calculation device comprising the calculation module 102 may be an electronic device, for example a computer, a smartphone or a tablet computer, in this case the screen of the calculation device may be the screen of the computer, of the smartphone or of the tablet computer.

The calculation device comprising the calculation module 102 may be a virtual machine located on a cloud network or a server not co-located with the user. In this case the calculation module 102 may be accessed via a further device for example an electronic device, for example a computer, a smartphone or a tablet computer and using technics known by the skilled person.

In embodiments the system 101 may comprise a plurality of calculation modules 102. Each calculation module 102 has a memory and a processor. The calculation modules 102 may be configured for jointly determining the value of the adaptation probability and possibly for jointly, based on the value of the adaptation probability, updating a value of the at least one characteristic of the head-mountable device.

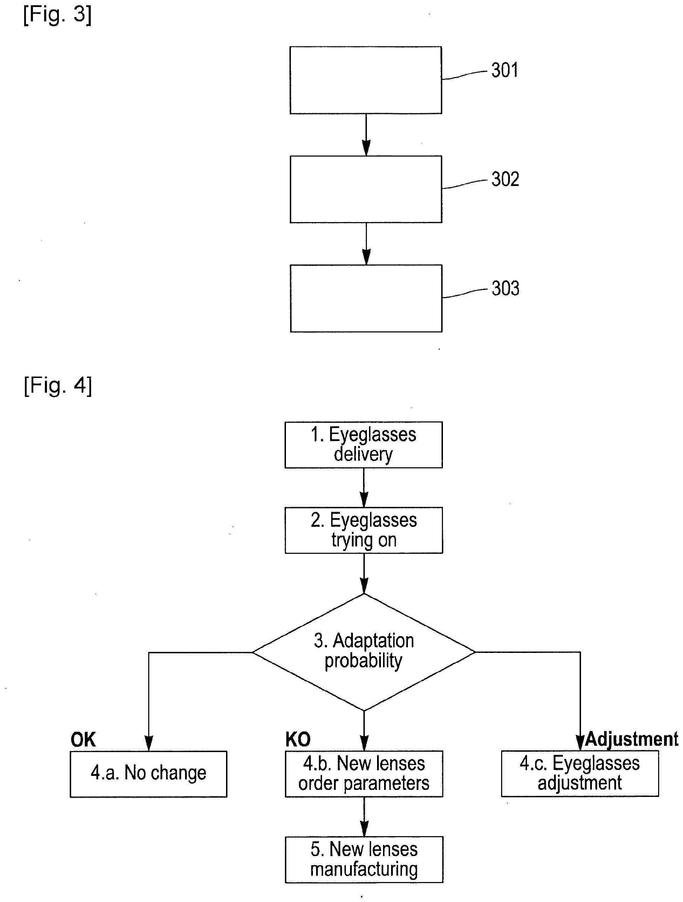

The figure 3 represents an example of the eyewear EY, which are intended to be worn by the user. This eyewear EY comprise two lenses L1 and L2 and a frame F. The frame F comprises two arms or temples A1 and A2 and a front part F1. The front part F1 comprises a right rim R1 and left rim R2 linked together by a bridge B. The front part F1 and the two arms A1 and A2 are linked using two hinges H1 and H2. The hinges H1 and H2 allow the individual to fold the arms A1 and A2 along the front part F1. The rims R1 and R2 of the frame F1 are configured to receive and to maintain the lenses L1 and L2. The eyewear EY can be correction eyewear for which the correction has been adapted to the individual by an eye care professional and eyewear without correction for example sunglasses.

The eyewear EY may also comprise an optical device. This optical device may be an active optical device.

The active optical device may be an electrochromic optical lens or may be configured to display elements.

By an active optical device, one means an optical device in which a value of a parameter of a functionality of the optical device can be modified. The value of the parameter may be modified by applying a signal, for example an electrical signal to terminals of the active optical device. The functionality may be one of the following:
- a transmittance level of the active optical device,
- a tint of the active optical device,
- a reflectance level of the active optical device and
- a parameter of a polarization of the active optical device, for example a polarization angle of the active optical device,
- an optical power of the active optical device,
- elements displayed by the active optical device. The elements may be images, symbols, letters, or texts. In embodiments, the elements to be displayed and the position of these elements may be selected.

### Description of the method for determining an updated value of at least one characteristic of a head-mountable device

To realize the determination of the updated value of the at least one characteristic of the head-mountable device, the memory 102-a may store a computer program comprising instructions which, when the program is executed by the processor 102-b, cause the calculation module 102 to carry out a method, for example a computer implemented method, for determining the updated value of the at least one characteristic of the head-mountable device.

The method, as presented in figure 3, comprises:
- a step 301 of obtaining a value of at least one adaptation parameter, the at least one adaptation parameter representing an adaptation of the head-mountable device to the user,
- a step 302 of determining the value of the adaptation probability of the head-mountable device to the user, when wearing the head-mountable device. The value of the adaptation probability may be determined based on the value of the at least one adaptation parameter and
- a step 303 of determining, based on the value of the adaptation probability, the updated value of the at least one characteristic of the head-mountable device.

The value of the adaptation probability may be expressed as a percentage or a rating.

The value of the adaptation probability may be displayed during or after the determination of the value of the adaptation probability.

The updated value of the at least one characteristic of the head-mountable device, may also be obtained from a current value of the at least one characteristic of the head-mountable device.

The at least one adaptation parameter may be at least one subjective parameter or at least one objective parameter.

The at least one adaptation parameter may be chosen among:
- parameters representing a sharpness of a vision of the user when wearing the head-mountable device, possibly when the user is performing a task. Sharpness means the ability of the user to perceive surroundings or a target clearly, without blurred vision.
- parameters representing a comfort of the vision of the user when wearing the head-mountable device, possibly when the user is performing a task. Comfort means the capacity of the user to perceive its environment clearly without making any effort and without any side effect.
- parameters representing a satisfaction of the vision of the user when wearing the head-mountable device, possibly when the user is performing a task. By satisfaction of the user for the head-mountable device, one means a subjective parameter, reflecting the judgement of the user at one time and in one condition, with the head-mountable device. Satisfaction may depend on the comfort and sharpness of the vision but also on other parameters.
- parameters representing a difference between the sharpness of the vision of the user when wearing the head-mountable device and a sharpness of a vision of the user when wearing previously used head-mountable device and/or a difference between the comfort of the vision of the user when wearing the head-mountable device and a comfort of the vision of the user when wearing the previously used head-mountable device and/or a difference between the satisfaction of the vision of the user when wearing the head-mountable device and a satisfaction of the vision of the user when wearing the previously used head-mountable device, possibly when the user is performing a task. In other words, using these parameters one may compare the quality of vision between its previous and its new head-mountable device.
- parameters representing a visual capability of the user when wearing the head-mountable device, possibly when the user is performing a task, for example parameters representing the ability of the user to discriminate an object at a distance.

The value of the at least one adaptation parameter may be determined in at least one vision zone of the lenses of the head-mountable device, advantageously in at least two vision zones of the lenses, or in three or more vision zones of the lenses. The number of vision zones on which one determines the value of the at least one adaptation parameter may depend on the type of the lenses of the head-mountable device or the type of activities the user is doing while wearing the head-mountable device. Determining the value of the at least one adaptation parameter in a plurality of vision zones is particularly advantageous when the head-mountable device has progressive addition lenses.

**The** vision zones of anyone of the lenses may be chosen among:
- a far vision zone, the far vision zone being used, in static or dynamic conditions, when the user looks at a landscape or a distance object,
- a near vision zone, the near vision zone being used, in static or dynamic conditions, when the user is looking at a hand-hold device and,
- an intermediate vision zone, the intermediated vision zone being used, in static or dynamic conditions, when the user is looking at a computer.

The vision zones are chosen according to the type of the lenses and activities realized while wearing the head-mountable device, for example:
- single vision lenses for myopia control, the far vision zone may be tested while looking at an acuity chart
- single vision lenses with near vision optimization, the near vision zone may be tested by reading on a smartphone
- progressive lenses, the far vision zone used for dynamic vision may be tested while walking
- progressive lenses with intermediate optimization, the intermediate vision zone may be tested while working on a computer.

In some embodiments, when the at least one adaptation parameter is the at least one subjective parameter its value may be considered in absolute or in comparison with a value of the subjective parameter associated with a previously used head-mountable device.

In embodiments the method of figure 3 may comprise a step of inputting the value of the at the least one adaptation parameter in a machine learning model dedicated to the determination of the value of the adaptation probability.

**The** machine learning model dedicated to the determination of the value of the adaptation probability being previously trained with
- at least one model value of the at least one adaptation parameter of at least one model user and
- at least one model indication of an adaptation of the head-mountable device to the at least one model user.

The indication of the adaptation may be discrete for example binary. When binary, the indication may be true when the user accepts the head-mountable device after a predetermined period and the indication may be false when the user requests another head-mountable device before the expiration of the predetermined period. The predetermined period may be some weeks or months after the delivery of the head-mountable device.

**The** model values may be experimental data coming from a plurality of model users. For each of the model users, model values of the at least one adaptation parameter are associated with an indication of an adaptation.

During the training, the model values of the at least one adaptation parameter are inputted to the machine learning model and the model indications of the adaptation are targets with which the outputs of the machine learning model are compared. Based on the differences between the outputs of the machine learning and the model indications of the adaptation, the values of the parameters of the machine learning model are updated.

The machine learning model can output the value of the probability of the adaptation despite being trained with targets having discrete values (the model indications of the adaptation). Indeed, statistical learning techniques estimate the likelihood of a certain outcome based on many labeled examples by learning patterns, correlations and relationships of data distribution. The machine learning model can output a value of a probability despite having been trained with discrete value targets.

The machine learning model, dedicated to the determination of the value of the adaptation probability, may also determine the indication of the adaptation.

The machine learning model dedicated to the determination of the value of the adaptation probability may be chosen among:
- at least one decision tree
- a random forests classifier and
- support vector machines.

The at least one decision tree may be trained using gradient boosting for example implemented using the open-source software Light GBM. The values of the hyperparameters may be: maximum depth of a tree = 3, criterion to measure the quality of a split = "gini". The following adaptation parameters may be used with the decision tree:
- Parameters representing the sharpness of the vision of the user, when wearing the head-mountable device, advantageously when the user is in near vision activities,
- Parameters representing the visual capability the user, advantageously when the user is doing far vision activities,
- Parameters representing the satisfaction of the vision of the user advantageously when the user is doing dynamic vision activities.

The random forests classifier may be a balanced random forests classifier with the hyperparameters having the following values: maximum depth of a tree = 6, criterion to measure the quality of a split = "entropy", number of features to consider when looking for the best split = 3. The following adaptation parameters may be used with the balanced random forests classifier:
- Parameters representing the comfort of the vision of the user, more precisely when using the intermediate vision zone of the lenses,
- Parameters representing the difference between the satisfaction of the user when wearing the current head-mountable device and the satisfaction of the user when wearing the previously used head-mountable device.

In an embodiment the support vector machine may be a support vector classifier (SVC) with the hyperparameters having the following values: regularization parameter=1 (often named "C"), type of kernel used="linear". The following adaptation parameters may be used with the support vector classifier (SVC):
- Parameters representing the satisfaction of the vision of the user, when wearing, for example in movement, the previously used head-mountable device,
- Parameters representing the sharpness of the vision of the user when wearing the head-mountable device advantageously when the user is in near vision activities,
- Parameters representing the satisfaction of the vision when wearing the head-mountable device advantageously when the user is in far vision activities.

The method of the figure 3 may also comprises:
- a step of displaying an indication of at least one test to realize by the user, the test having the aim of determining the value of the adaptation parameter and/or the adaptation probability and
- a step of receiving an indication of a result of the at least one test.

The step of displaying the at least one test may be realized by the display of the calculation device of the system 101 and the step of receiving the indication of the result may be realized by the inputting means of the calculation device of the system 101.

The at least one test may be part of the customer journey. The customer journey is also known as a subjective journey. This customer journey is built with the elements described above and to represent different situations of life corresponding to users' habits and activities.

The customer journey may vary depending on the type of lenses of the head-mountable device and also on the vision zones tested. For example, for myopia control lenses, the customer journey may comprise a test of a far vision when looking at an acuity chart. For single vision lenses with near vision optimization, the customer journey may comprise a near vision test realized when reading on a smartphone. For progressive addition lenses, the customer journey may comprise a dynamic vision test realized when walking. For progressive addition lenses with intermediate optimization, the customer journey may comprise the intermediate vision test realized when working on a computer.

In an embodiment, to determine the updated value of the at least one characteristic of the head-mountable device, the method of the figure 3 may comprise a step of inputting:
- the value of the at least one adaptation parameter and
- the value of the adaptation probability
   in a second machine learning model dedicated to the determination of the updated value of the at least one characteristic of the head-mountable device.

The second machine learning model is previously trained with:
- at least one model value of the at least one adaptation parameter,
- at least one model value of the adaptation probability and
- at' least one model value of the at least one characteristic of the head-mountable device.

The model values may be experimental data coming from the plurality of the model users. For each of the model users, model values of the at least one adaptation parameter and model values of the adaptation probability are associated with model values of the at least one characteristic of the head-mountable device.

During the training, the model values of the at least one adaptation parameter and the model values of the adaptation probability are inputted to the second machine learning model and the model values of the at least one characteristic of the head-mountable device are targets against which the outputs of the machine learning model are compared. Base on the comparison the values of the parameters of the second machine learning model are updated.

The value of the at least one characteristic may also be determined based on the result of the at least one test realized during the customer journey.

The at least one characteristic of the head-mountable device may be chosen among:
- a fitting height of a right lens of the head-mountable device or of a left lens of the head-mountable device,
- a pupillary distance of the right lens or the left lens,
- a sphere power of the right lens or the left lens,
- a cylinder power of the right lens or the left lens,
- a cylinder axis of the right lens or the left lens,
- an addition of the right lens or the left lens,
- an addition of the left lens,
- a pantoscopic angle of a frame of the head-mountable device,
- a wrap angle of the frame,
- a refractive index of a material of the right lens or the left lens,
- a useful diameter of the right lens or the left lens,
- a position of the near vision zone of the right lens or the left lens,
- or a position of the eye rotation center of the user compared to the right lens or the left lens when the user is wearing the head-mountable device. ;

The method of the figure 3 may also comprise a step of determining a cause of non-adaptation. The system may be configured to determine the at least one characteristic of the head-mountable device, for example of one or both of the lenses to update, in correlation with the cause of non-adaptation,
- when the cause of non-adaptation is a fitting of the head-mountable device, the method may comprise determining an updated value of the pupillary distance of the right lens, an updated value of the pupillary distance of the left lens, an updated value of the fitting height of the right lens, or an updated value of the fitting height of the left lens,
- when the cause of non-adaptation is a correction of the head-mountable device, the method may comprise determining an updated value of the sphere power of the right lens, an updated value of the sphere power of the left lens, an updated value of the cylinder power of the right lens, an updated value of the cylinder power of the left lens, an updated value of the cylinder axis of the right lens, an updated value of the cylinder axis of the left lens, an updated value of the addition of the right lens or an updated value of the addition of the left lens,
- when the cause of non-adaptation is a personalization parameter of the user, the method may comprise determining an updated value of the pantoscopic angle or an updated value of the wrap angle,
- when the cause of non-adaptation is an issue with one other order parameter, the method may comprise determining an updated value of the refractive index, an updated value of the useful diameter to reduce as best as possible the edge thickness of the lens, an updated value of the position of the near vision zone or an updated value of the position of the eye rotation center.

The method of the figure 3 may also comprise a step of determining a difference between an updated value of the at least one characteristic of the head-mountable device and a previous value of the at least one characteristic of the head-mountable device. The method may comprise a step of harmonization of the updated values, using optometry rules to recommend updating or not the value of the at least one characteristic of the head-mountable device, and adjusting or not the value of the at least one characteristic of the head-mountable device. The rules should be for example: the far vision zone sphere has to be changed but the near vision zone sphere has not to be changed, or round the value if necessary, so that it can be noticeable for the customer.

In embodiments of the method of figure 3, the determination of the updated value of the at least one characteristic of the head-mountable device, may also be based on a value of at least one physiological parameter of the user.

The at least one physiological parameter of the user may comprise an actual correction of the user, a pupillary distance of the user and/or a previous correction of the user.

In embodiments of the method of figure 3, the updated value of the at least one characteristic of the head-mountable device may also be determined based on at least one fitting measurement.

The at least one fitting measurement may comprise a measurement of the way the user is wearing the head-mountable device, such as a fitting height between the pupil of the user and the frame, a wrap angle of the frame, or a pantoscopic tilt of the frame.

In embodiments, when the value of the adaptation probability is below an adaptation threshold, the step of determining the updated value of the at least one characteristic of the head-mountable device may comprise a step of determining an updated value of at least one characteristic of one of the lenses of the head-mountable device or an updated value of at least one characteristic of the frame of the head-mountable device.

The adaptation threshold is adjustable, depending on the requirement, by the optician or by the software designer.

The at least one characteristic of the head-mountable device may be a production parameter.

In embodiments one may manufacture a new head-mountable device based on the updated value of the at least one characteristic. One may for example order new lenses that will be manufactured using the updated value of the at least one characteristic. One may also order the same lenses that will be edged and mounted differently than the previous lenses. In other words, in embodiments the method of the figure 3 may also comprise a step of commanding the manufacturing device 103 for manufacturing the new head-mountable device, based on the updated value of the at least one characteristic of the head-mountable device.

When one determines an updated value of the at least one characteristic of the frame of the head-mountable device, one, for example the eye care professional, may apply the updated value by adjusting a shape of the frame of the head-mountable device currently used by the user, for example by bending the temples.

The figure 4 represents the different steps of using the method of the figure 3.

In a first step the eye care professional delivers the head-mountable device to the user, or the user receives the head-mountable device in another way.

In a second step the user evaluates its quality of vision with his new head-mountable device, in realistic conditions that correspond to his habits and activities. The quality of vision is evaluated:
- using several adaptation parameters, (satisfaction level, sharpness, comfort, head-mountable device preference between his previous and new head-mountable device, visual capabilities, ...), to obtain the most confident result as possible,
- on one or more vision zones, depending on the lenses product category and activities realized while wearing the head-mountable device,
- by following the customer journey adapted to one or more activity usually done by the user.

In a third step one determines the value of the adaptation probability.

In fourth steps, and depending on the value of the adaptation probability one may:
- Realize no change to the head-mountable device, the adaptation to the user is good, he can keep the current head-mountable device (step 4-a).
- Determine an updated value of the at least one characteristic of the head-mountable device, that involves manufacturing new elements of the head-mountable device generally manufacturing new lenses. The manufacture and edging/mounting of the new lenses are realized by a device/machine using the updated values of the at least one characteristic. For example, when the fitting height of both lenses is 3 mm too high; one may order lenses with a lower fitting height of 3 mm, when the sphere power of both lenses is too convex of 0.5 diopters; one may order lenses with a sphere power more concave of 0.5 diopters (step 4-b).
- Determine an updated value of the at least one characteristic of the head-mountable device, that involves mainly adjustment of the frame, for example by bending the temples, or adjustment of mounting parameters of the lenses (step 4-c).

In a fifth step, one may manufacture the new head-mountable device based on the updated values of the at least one characteristic of the head-mountable device. Generally, new lenses are ordered, the order is sent to the lab, lenses are manufactured, and the new lenses are edged and mounted in the frame. In other words, depending on the updated values of the at least one characteristic of the head-mountable device, more precisely of the lenses, machines can process the manufacturing of the new lenses. After the production of the lenses and using the new mounting parameters given by the system, there is the edging/mounting of the lenses by a dedicated machine.

In embodiment the method of the figure 3 may also comprise a step of displaying, for example using the display of the calculation device, a type of a problem that may be solved by the updated value of the at least one characteristic of the head-mountable device.

## Claims

1. System (101) for determining an updated value of at least one characteristic of a head-mountable device,
the system being configured:
- to obtain a value of at least one adaptation parameter, the at least one adaptation parameter representing an adaptation of the head-mountable device to a user,
- to determine a value of an adaptation probability of the head-mountable device to the user when wearing the head-mountable device based on the value of the at least one adaptation parameter, and
- to determine, based on the value of the adaptation probability, the updated value of the at least one characteristic of the head-mountable device.

2. The system (101) according to the claim 1
the at least one adaptation parameter being chosen among:
• parameters representing a sharpness of a vision of the user when wearing the head-mountable device,
• parameters representing a comfort of the vision of the user when wearing the head-mountable device,
• parameters representing a satisfaction of the vision of the user when wearing the head-mountable device,
• parameters representing a difference between the sharpness of the vision of the user when wearing the head-mountable device and a sharpness of a vision of the user when wearing previously used head-mountable device and/or a difference between the comfort of the vision of the user when wearing the head-mountable device and a comfort of the vision of the user when wearing the previously used head-mountable device and/or a difference between the satisfaction of the vision of the user when wearing the head-mountable device and a satisfaction of the vision of the user when wearing the previously used head-mountable device, and
• parameters representing a visual capability of the vision of the user when wearing the head-mountable device.

3. The system (101) according to the claim 1 or 2,
the value of the at least one adaptation parameter being obtained for at least one vision zone of a lens of the head-mountable device,
the at least one vision zone being chosen among:
• a far vision zone of the lens,
• a near vision zone of the lens and,
• an intermediate vision zone of the lens.

4. The system (101) according to anyone of the claim 1 to 3,
the system being configured to input the value of the at least one adaptation parameter in a machine learning model dedicated to the determination of the value of the adaptation probability,
the machine learning model dedicated to the determination of the value of the adaptation probability being previously trained with
- at least one model value of the at least one adaptation parameter and
- at least one model indication of an adaptation of the head-mountable device.

5. The system (101) according to the claim 4,
the machine learning model dedicated to the determination of the value of the adaptation probability being chosen among:
• at least one decision tree
• a random forests classifier and
• support vector machines.

6. The system (101) according to any one of the claims 1 to 5,
the system being configured to display an indication of at least one test to realize by the user and the system being configured to receive an indication of a result of the at least one test and the system being configured to determine the value of the adaptation probability also based on the result of the at least one test.

7. The system (101) according to the any one of the claims 1 to 6,
the system being configured to determine a cause of non-adaptation,
the cause of non-adaptation being chosen among:
- a fitting of lenses of the head-mountable device
- a correction of the lenses of the of the head-mountable device
- personalization parameters of the user and
- other order parameters.

8. The system (101) according to the claim 7,
- when the cause of non-adaptation is the fitting of the head-mountable device, the at least one characteristic of the head-mountable device is a fitting height of a right lens, a fitting height of a left lens of the head-mountable device, a pupillary distance of the right lens of the head-mountable device or a pupillary distance of the left lens and the system is configured to determine an updated value of the pupillary distance of the right lens, an updated value of the pupillary distance of the left lens, an updated value of the fitting height of the right lens, or an updated value of the fitting height of the left lens,
- when the cause of non-adaptation is the correction of the head-mountable device, the at least one characteristic of the head-mountable device is a sphere power of the right lens, a sphere power of the left lens, a cylinder power of the right lens, a cylinder power of the left lens, a cylinder axis of the right lens, a cylinder axis of the left lens, an addition of the right lens or an addition of the left lens and the system is configured to determine an updated value of the sphere power of the right lens, an updated value of the sphere power of the left lens, an updated value of the cylinder power of the right lens, an updated value of the cylinder power of the left lens, an updated value of the cylinder axis of the right lens, an updated value of the cylinder axis of the left lens, an updated value of the addition of the right lens or an updated value of the addition of the left lens,
- when the cause of non-adaptation is the personalization parameters of the user, the at least one characteristic of the head-mountable device is a pantoscopic angle of a frame of the head-mountable device or a wrap angle of the frame and the system is configured to determine an updated value of the pantoscopic angle or an updated value of the wrap angle, and/or
- when the cause of non-adaptation is an issue with one other order parameter, the at least one characteristic of the head-mountable device is refractive index of a material or the lens or a useful diameter of the lens of the head-mountable device to reduce as best as possible the edge thickness of the lens, or a position of the near vision zone of the lens, or a position of a eye rotation center of the user compared to the lens when the user is wearing the head-mountable device and the system is configured to determine an updated value of the refractive index, an update value of the useful diameter, an updated value of the position of the near vision zone or an updated value of the position of the eye rotation center.

9. The system (101) according to any one of the claims 1 to 8,
the system being configured to harmonize the updated value of the at least one characteristic of the head-mountable device, using at least one optometry rule.

10. The system (101) according to any one of the claims 1 to 8,
the system being configured to determine, also based on a value of at least one physiological parameter of the user, the updated value of the at least one characteristic of the head-mountable device.

11. The system (101) according to the any one of the claims 1 to 10,
the system being configured when the value of the adaptation probability is below a threshold to determine an updated value of at least one of characteristic of lenses of the head-mountable device.

12. The system (101) according to any one of the claims 1 to 11,
the system may also be configured to display a type of a problem that may be solved by the updated value of the at least one characteristic of the head-mountable device and/or to display the updated value of the at least one characteristic of the head-mountable device.

13. The system (101) according to any one of the claims 1 to 12 and the claim 6,
the system being configured to determine the updated value of the at least one characteristic of the head-mountable device also based on the result of the at least one test.

14. Computer-implemented method for determining an updated value of at least one characteristic of a head-mountable device,
the computer-implemented method comprising:
- obtaining (301) a value of at least one adaptation parameter, the at least one adaptation parameter representing an adaptation of the head-mountable device to a user,
- determining (302) a value of an adaptation probability of the user when wearing the head-mountable device based on the value of the at least one adaptation parameter, and
- determining (303), based on the value of the adaptation probability, the updated value of the at least one characteristic of the head-mountable device.

15. The computer-implemented method according to the claim 14,
the at least one adaptation parameter being chosen among:
• parameters representing a sharpness of a vision of the user when wearing the head-mountable device,
• parameters representing a comfort of the vision of the user when wearing the head-mountable device,
• parameters representing a satisfaction of the vision of the user when wearing the head-mountable device, possibly when the user is performing a task,
• parameters representing a difference between the sharpness of the vision of the user when wearing the head-mountable device and a sharpness of a vision of the user when wearing previously used head-mountable device and/or a difference between the comfort of the vision of the user when wearing the head-mountable device and a comfort of the vision of the user when wearing the previously used head-mountable device and/or a difference between the satisfaction of the vision of the user when wearing the head-mountable device and a satisfaction of the vision of the user when wearing the previously used head-mountable device and
• parameters representing a visual capability of the vision of the user when wearing the head-mountable device.
